# FASCICULE DE BREVET EUROPEEN

(11) **EP 1 295 494 B1**
(45) Date de publication et mention de la délivrance du brevet: **16.06.2004**
(21) Numéro de dépôt: 01949532.4
(22) Date de dépôt: 26.06.2001
(51) Int. Cl.: H04Q 7/22

(54) **SYSTEME DE COMMANDE A DISTANCE POUR ACTIVER L'ENVOI D'UN MESSAGE**
FERNBEDIENUNGSSTEUERUNG FÜR AKTIVIERUNG DES SENDENS EINER NACHRICHT
REMOTE CONTROL SYSTEM FOR ACTIVATING DISPATCH OF A MESSAGE

(30) Priorité: 27.06.2000 FR 0008206
(43) Date de publication de la demande: 26.03.2003
(73) Titulaire: Feghali, René, 33000 Bordeaux (FR)
(72) Inventeur: Feghali, René, 33000 Bordeaux (FR)
(74) Mandataire: Casalonga, Axel
(86) Numéro de dépôt international: PCT/FR2001/002022
(87) Numéro de publication internationale: WO 2002/001896

(56) Documents cités:
- EP-A- 0 848 564
- WO-A-97/41654
- US-A- 4 750 151
- US-A- 5 740 369
- US-A- 5 796 351
- US-A- 6 115 611

## Description

L'invention concerne un distributeur de données commandé par un système de transmission de coordonnées d'adresses détenu par l'utilisateur pour activer l'adressage de messages à caractère informatif aux différentes coordonnées d'adresses transmises. Elle concerne tout système de transmission de coordonnées personnelles et de commande d'un distributeur de données telles que des messages informatifs locaux, des adresses de pages Internet et/ou des fichiers exécutables adressés aux seules coordonnées transmises caractérisé par le fait qu'il comprend :
- un moyen de transmission de coordonnées d'adresses, celles permettant de joindre un utilisateur telles un numéro d'appel ou une adresse électronique e-mail.
- un moyen de commande du distributeur pour l'activation ou la désactivation de l'adressage des données aux coordonnées d'adresses transmises.
- un ou plusieurs moyens de réception reliés au distributeur de données pour l'acheminement des coordonnées d'adresse et commandes.
- un distributeur automatique de données équipé d'un système d'acquisition et de traitement des coordonnées d'adresses transmises pour leur adresser respectivement une ou plusieurs données via les réseaux d'opérateurs concernés.

Le moyen de transmission et le moyen de commande sont confondus et constituent un moyen unique. Par conséquent et selon l'invention la commande du distributeur est une commande par transmission de coordonnées d'adresses. Le distributeur de données est un dispositif qui a pour fonction d'adresser en échange des coordonnées d'adresses transmises des messages adressés aux seules coordonnées d'adresses transmises. Selon une première caractéristique, le distributeur de données est formé d'un système de communication de messages informatifs locaux et/ou d'adresses de pages Internet et/ ou de fichiers de programmes exécutables pour être attribuées puis adressées à des coordonnées d'utilisateurs d'un téléphone portable équipé ou non d'Internet et/ou tout ordinateur connecté à Internet. L'invention concerne également les moyens possibles pour la commande du distributeur de données par activation volontaire de l'utilisateur. Le moyen de commande a pour fonction de commander le distributeur par activation de la transmission de coordonnées; Il a pour première caractéristique celle d'être porté ou fixé sur un support pour accompagner l'utilisateur dans ses déplacements. L'utilisateur peut le fixer par exemple dans son véhicule.

Traditionnellement, la communication de ses coordonnées est effectuée par remplissage d'un formulaire papier manuscrit indiquant le nom de l'utilisateur puis par saisie manuelle des coordonnées sur un clavier d'ordinateur. D'autres systèmes comme celui divulgué par la demande US-A-5 796 351 permettent à un utilisateur d'obtenir sur un terminal portable des informations relatives à un produit exposé. Le système suivant l'invention offre par exemple l'avantage à l'utilisateur d'activer la transmission à distance des coordonnées par simple appui sur un bouton. Il offre également l'avantage à l'utilisateur de pouvoir retirer, même en se déplaçant, à distance et de façon autonome et instantanée toutes informations locales ou relatives à un ou plusieurs produits exposés par le gestionnaire d'un lieux donné. Mais en plus il tend à éviter l'utilisateur de dévoiler son nom et/ou ses coordonnées à une tierce personne. Il offre aussi l'avantage à l'utilisateur de pouvoir choisir le(s) lieux de réception des messages. Le système de commande et transmission de coordonnées d'adresses a pour première caractéristique celle d'être porté par l'utilisateur. Il peut l'activer en arrivant à proximité d'un distributeur de données ou à proximité d'un des récepteurs du système de récepteurs associé au distributeur. Le distributeur de données est commandé par la détection de chaque coordonnée transmise par l'utilisateur. Les coordonnées sont ainsi mémorisées par le distributeur de données. Un calculateur associe alors à chacune des coordonnées mémorisées un message correspondant commun ou aléatoire pour l'adresser uniquement à destination de chacune des coordonnées d'adresses mémorisées.

L'invention a pour objet la communication automatique d'une ou de plusieurs données aux coordonnées d'un utilisateur dès lors qu'il a transmis les coordonnées à un distributeur de données.

Les distributeurs de données ont pour application celles d'équiper par exemple, des panneaux d'affichage extérieurs les vitrines de commerces et les rayons de supermarchés, pour communiquer un message programmé associé à un produit exposé, à un client qui souhaite en obtenir les informations promotionnelles par pointage et activation du procédé.

L'invention a également pour objet le procédé de mise en oeuvre du système selon l'invention ainsi que les commandes par transmission d'un code de destinataire et dispositifs d'acquisition et de transfert et les récepteurs associés, ainsi que le distributeur de messages et les logiciels destinées à la mise en oeuvre.

L'invention a pour application sur un téléphone portable équipé d'Internet, l'ouverture automatique ou facilitée de la page Internet sur l'écran de son terminal, celle du lieux ou commerce visité, ou relative à un produit visé par l'utilisateur.

L'invention a encore pour objet un module d'acquisition et de transfert équipant un support d'affichage publicitaire ou de signalisation ou un produit exposé, commandé par la transmission à distance d'un code de destinataire pour l'activation de l'envoi automatique d'un courrier électronique ou d'un courrier postal adressé à l'attention de l'utilisateur destinataire . Elle concerne tout système de commande d'un distributeur de messages par l'émission d'un code de destinataire correspondant à une adresse électronique et/ou postale ainsi qu'à un numéro d'appel téléphonique caractérisé par le fait qu'il comprend :
- Un moyen de sélection du support d'affiche ou du produit exposé par pointage à distance ou sélection séquentielle
- Un moyen de validation par émission d'un code de destinataire correspondant à l'adresse électronique, postale et/ou au numéro d'appel téléphonique de l'utilisateur destinataire
- Un moyen d'acquisition et de transfert du code de destinataire suivi de la référence du produit désigné vers un distributeur de messages
- Un distributeur de messages équipé d'un moyen d'adressage des messages à l'attention de l'utilisateur destinataire
- Un moyen d'activation d'un appel téléphonique pour la mise en relation de l'utilisateur destinataire avec l'annonceur de l'affiche ou le vendeur du produit désignés.

Le moyen de transmission et celui de commande sont confondus et constituent un moyen unique. Par conséquent et selon l'invention, la commande du distributeur de messages est une commande par transmission d'un code de destinataire. Le distributeur de messages est un dispositif qui a pour fonction d'adresser en échange des codes de destinataire transmis lors de l'activation par l'utilisateur destinataire, des messages adressés aux seules coordonnées d'adresses de courrier électronique ou classique ainsi qu'aux seules coordonnées téléphoniques ou numéros d'appel associés respectivement aux codes de destinataires. Selon une première caractéristique, le distributeur de messages est formé d'un système de communication de messages sous formes de textes, graphiques ou graphiques animés et peuvent inclure des données, tel que des adresses de pages Internet et/ou des fichiers exécutables. Ces messages suivant leur nature (courrier papier, courrier électronique, messages courts, appels vocaux) sont véhiculés par différents réseaux pour être reçus sur un terminal fixe ou mobile et/ou dans une boîte aux lettres.

L'invention concerne également les moyens possibles pour la commande du distributeur de messages par activation volontaire de l'utilisateur destinataire. Le moyen de commande a pour fonction de commander le distributeur de messages suite à l'émission du code de destinataire; Il a pour première caractéristique celle d'être porté ou fixé sur un support pour accompagner l'utilisateur destinataire dans ses déplacements. L'utilisateur destinataire peut le fixer par exemple dans son véhicule ou porte clés etc.

Traditionnellement, la mémorisation de l'information concernant une affiche publicitaire ou un produit se fait par mémorisation naturelle ou par inscription manuscrite des informations sur un papier.

Le système suivant l'invention offre par exemple l'avantage à l'utilisateur de mémoriser les informations présentes sur un support d'affichage équipé d'un module d'acquisition et de transfert par simple appui sur un bouton. Il offre également l'avantage à l'utilisateur destinataire de pouvoir retirer, quelque soit sa vitesse de déplacement, à distance et de façon autonome et instantanée des informations relatives à une ou plusieurs affiches publicitaires, de signalisation ou produits exposés. L'avantage de l'invention est celui de s'appliquer aux téléphones et ordinateurs actuels, sans aucune modification physique ni logicielle des terminaux actuels. Il diffuse des messages sur plusieurs terminaux à la fois et de façon simultanée (portable et fixe) et au choix de l'utilisateur. Il peut s'adresser à des utilisateurs qui ne possèdent qu'une adresse postale.

Le système de commande à distance pour l'expédition d'un message relatif à une affiche publicitaire ou un produit exposé, a pour première caractéristique celle d'être porté par l'utilisateur destinataire . Il peut l'activer en arrivant à proximité d'un module d'acquisition et de transfert ou à proximité d'un des récepteurs associés au module d'acquisition et de transfert.

Le distributeur de messages est activé par la détection du code de destinataire transmis par l'utilisateur destinataire. Le distributeur de messages associe à chaque code de destinataire, une référence de produit ou référence de l'affiche publicitaire ou de signalisation.

On entend par « système de commande pour activer l'expédition d'un message », ou « système de commande », un boîtier de sélection, de pointage et de transmission destiné à communiquer un code de destinataire à un distributeur de messages.

On entend par « messages » ou « courrier » ou encore « courrier de message(s) » ou « enveloppe » des messages textuels et/ou graphiques à caractère informatif, publicitaire ou promotionnel relatifs à un commerce ou lieu visité mais aussi à un produit ou famille de produits exposés et encore relatives à une publicité ou affichée sur un panneau extérieur ou informations relatives à un panneau de signalisation. Ces messages peuvent être envoyés sur les appareils portables sous forme de messagerie courte dite SMS et/ou sous forme d'un courrier électronique e-mail. Ils peuvent être aussi envoyés sous forme d'un courrier papier. Un message peut inclure une information textuelle, graphique ou graphique animée, une adresse Internet dite URL permettant de faciliter l'ouverture d'une page Internet locale relative au lieu visité ou panneau publicitaire visé. Un message peut être constitué uniquement d'un fichier de programme exécutable par un terminal.

On entend par « code de destinataire », ou « coordonnée » ou encore « coordonnée d'adresse », toute séquence de code ou code d'identification de l'utilisateur associée à une adresse postale ou électronique dite e-mail ou à un numéro d'appel téléphonique, ainsi que toute coordonnée d'adresse ou de numéro d'appel permettant de joindre un utilisateur sur un terminal donné ou dans une boîte aux lettres. Elle peut être composée d'une coordonnée d'adresse, coordonnée téléphonique, d'un numéro d'appel et/ou une adresse postale, mais aussi une adresse électronique dite e-mail ou encore un numéro identifiant un terminal électronique.

On entend système de commande, système de commande à distance ou boîtier de commande, le module électronique à disposition de l'utilisateur pour activer la sélection séquentielle ou par orientation du module et/ou la commande et la transmission du code de destinataire au module d'acquisition et de transfert.

On entend par module d'acquisition et de transfert ou module d'acquisition, le module électronique équipant le support d'affichage publicitaire ou de signalisation, au produit ou objet exposé, ayant pour fonction l'acquisition des codes de destinataire transmis par le système de commande à distance et le transfert des codes de destinataire vers le distributeur d'information.

On entend par « distributeur de messages » ou « distributeur de données », un dispositif d'expédition de messages adressés aux utilisateurs munis de codes de destinataire. Le distributeur est constitué d'un serveur, il est relié aussi à un système de communication et de réseaux pour adresser des messages à l'attention des utilisateurs. Le distributeur mémorise toutes les adresses et coordonnées d'adresses relatives aux codes de destinataire ainsi que les références relatives aux différentes affiches et produits.

On entend par message(s) ou données ou données locales, des messages textuels et/ou graphiques à caractère informatif, publicitaire ou promotionnel relatifs à un local, un commerce ou à un lieu visité mais aussi à un produit ou famille de produits exposés et encore relatives à une publicité affichée sur un panneau extérieur ou relatives à la signalisation d'un itinéraire. Ces messages peuvent aussi être relatifs à une panne mécanique ou électronique ou d'entraînement sur un support d'affichage à séquences variables. Ces messages peuvent être adressés sous forme de messagerie courte dite SMS et/ou sous forme d'un courrier électronique e-mail ou encore sous forme d'un courrier postal à destination de l'utilisateur. Un message peut inclure une adresse Internet dite URL permettant de faciliter l'ouverture d'une page Internet locale relative au lieu visité ou panneau publicitaire visé. Une donnée locale peut être constituée d'un fichier de programme exécutable par le terminal.

On entend par l'acquisition des codes de destinataires, le procédé par lequel les récepteurs associés au module d'acquisition et de transfert, ou les modules d'acquisition et de transfert reçoivent le code de destinataire et le communiquent au distributeur de messages par une liaison filaire ou liaison sans fil.

On entend par page Internet locale, la page Internet relative au commerce ou au lieu visité, mais aussi relative au fabricant d'un ou de plusieurs produits exposés ou relative à un panneau d'affichage publicitaire. On entend par adresse de page Internet dite URL, le lien qui permet l'ouverture d'une page Internet correspondante.

L'invention a pour objet la communication par l'envoi automatique d'un ou de plusieurs messages aux adresses enregistrées d'un utilisateur dès lors qu'il a transmis un code de destinataire à un module d'acquisition et de transfert qui le communique au distributeur de messages.

Le module d'acquisition et de transfert a pour applications celles d'équiper par exemple, des panneaux d'affichage extérieurs publicitaire ou de signalisation, des vitrines de commerces, des enseignes de magasins, des locaux visités et des rayons de supermarchés, pour communiquer un ou plusieurs message(s) programmé(s) associé(s) à l'affiche, au produit exposé, adressé à un client qui souhaite en obtenir des informations complémentaires par pointage et activation du procédé.

L'état de la technique ne définit aucun moyen pour retirer des informations relatives à l'affiche d'un support d'affiche désigné par l'observateur pour l'expédition d'un message sur un terminal donné. Traditionnellement, l'observateur n'a pas le temps de noter les informations véhiculées par une affiche publicitaire. Le système selon l'invention, offre la possibilité à l'observateur muni du système de commande et transmission d'un code de destinataire, de mémoriser des informations à partir d'un support de panneau d'affichage équipé d'un module d'acquisition et de transfert à l'aide du système de commande et de transmission.

Dans un mode d'application, les distributeurs de messages sont des bornes publicitaires à savoir que l'on veut s'adresser aux destinataires possesseurs d'une ou de plusieurs adresses et/ou numéros de téléphone.

L'invention a également pour objet le procédé de mise en oeuvre du système selon l'invention ainsi que les commandes par transmission de codes de destinataires et les dispositifs de distributeurs de messages et modules d'acquisition et de transfert associés, destinés à la mise en oeuvre.

Le système de commande selon l'invention, offre la possibilité de choisir de façon séquentielle une cible (affiche, produit) parmi d'autres. Le système de commande est équipé de moyens de sélection séquentielle des produits rapprochés ; des appuis successifs sur le bouton de commande allument successivement un voyant de témoin ou témoin mécanique associé à chaque affiche, produit ou objet exposé.

Le système de commande selon l'invention, offre la possibilité de choisir par simple orientation du système de commande en direction de l'affiche, produit ou objet exposé. Une source de signal codant une référence équipe chaque affiche, produit ou objet exposé. Le système de commande est équipé de moyens de réception directionnels dudit signal. L'utilisateur oriente le système de commande en direction de l'affiche, produit ou objet exposé visé équipé de moyens de diffusion d'un signal constant codant sa référence. Le système de commande est équipé d'un émetteur/récepteur directif pour ne mémoriser temporairement que le signal de référence issu de l'affiche ou du produit visé par orientation du système par l'utilisateur. L'utilisateur destinataire dirige son boîtier vers la source de signal et déclenche par appui sur le bouton de commande, la réception par le système de commande, du signal codant la référence du support d'affiche ou du produit exposé. Le système de commande mémorise alors la référence du produit visé et la transmet avec le code de destinataire, au module d'acquisition et de transfert. La validation par appui sur un bouton a pour fonction de transmettre le code de destinataire suivi du code de référence ainsi reçu et mémorisé temporairement par le système de commande. Le module d'acquisition et de transfert ne reçoit que issu du récepteur directionnel.

Le système de commande selon l'invention est équipé de deux boutons. L'un permet d'activer la sélection séquentielle, l'autre permet la validation du procédé d'expédition de messages selon l'invention.

Le système de commande suivant le mode préférentiel de l'invention, est équipé d'un seul bouton qui a un rôle de sélection successive pour tout appui bref et un rôle de validation pour tout appui prolongé. Selon ce mode préférentiel et dans le cas de figure composé d'une seule affiche, produit ou objet exposé autour de l'utilisateur, l'appui bref ayant pour rôle de sélection, joue le rôle de validation directe. Un double appui prolongé après sélection, a pour fonction d'établir un appel téléphonique pour la mise en relation de l'utilisateur destinataire avec l'annonceur ou le vendeur de l'affiche ou du produit désignés. Un double appui bref sur le bouton de validation dans le cas de figure de la présence d'une seule affiche ou d'un seul produit autour de l'utilisateur, a pour fonction d'établir un appel téléphonique pour la mise en relation de l'utilisateur destinataire avec l'annonceur ou le vendeur de l'affiche ou du produit désignés.

Le système est équipé d'un interrupteur à deux positions pour déclencher de façon permanente, l'émission périodique de la transmission du code de destinataire.

Dans un mode d'application, les modules d'acquisition et de transfert équipent des bornes publicitaires ou des mobiliers spécialisés à savoir que l'on veut s'adresser aux porteurs d'une ou de plusieurs coordonnées d'adresses et/ou coordonnées téléphoniques.

Dans un mode d'application du module d'acquisition et de transfert sur des panneaux d'affichages déroulants ou à séquences variables, le module est équipé pour synchroniser la référence de l'affiche en cours de visualisation et le transfert de la référence de l'affiche suivie du code de destinataire vers le distributeur de messages pour n'expédier que le message désigné par l'utilisateur.

Le système selon l'invention permet de s'adresser directement et à distance sur les terminaux des porteurs du système de transmission et commande et notamment ceux qui souhaitent retirer des informations disponibles auprès d'un support d'affiche publicitaire ou signalétique, d'une vitrine, d'un produit ou d'une enseigne. Le distributeur de messages a pour fonction d'associer à chacun des destinataires, un ou plusieurs messages.

Le système selon l'invention, offre la possibilité aux détenteurs d'un système de commande et de transmission d'un code de destinataire associé à une adresse électronique, adresse postale et/ou numéro d'appel téléphonique d'interrompre le processus d'adressage des messages et ce par un signal de désactivation communiqué au distributeur de messages.

A cet effet, le système de commande à distance pour activer l'expédition d'un message relatif à une affiche publicitaire ou signalétique à partir d'un support de panneau ou encore à un produit exposé, détenu par l'utilisateur comprend :
- Une mémoire de code de destinataire ainsi qu'un moyen de transmission du code de destinataire et un moyen de sélection de l'affiche ou du produit
- Un émetteur/récepteur directif pour la sélection de l'affiche, produit ou objet exposé par simple orientation dudit système en direction de l'affiche, produit ou objet exposé désignés, et une mémoire tampon prévue à cet effet
- Un bouton de validation
- Un sélecteur de validation permanente et périodique
- Une source d'émission infrarouge ou radio
- Une source d'énergie renouvelable
- Un témoin lumineux

Le système de commande et transmission peut inclure une source de lumière visible ou infrarouge et/ou une source d'émission radio omnidirectionnelle pour viser seulement un des récepteurs associés à un produit ou groupe de produits parmi d'autres.

Le système de commande et transmission peut inclure une source de lumière visible ou infrarouge pour viser un des récepteurs associés au distributeur de messages.

Le système de commande à distance et de transmission d'un code de destinataire détenu par l'utilisateur et suivant un mode possible de l'invention comprend :
- une carte à mémoire ou carte magnétique pour mémoriser le code de destinataire

Le moyen de commande et transmission d'un code de destinataire suivant l'invention caractérisé par le fait qu'il est porté par l'utilisateur destinataire sous forme d'un boîtier miniaturisé ou intégré à son terminal portable ou bien intégré à sa batterie ou à tout autre accessoire transporté pour accompagner l'utilisateur destinataire .

Le module d'acquisition et de transfert comprend :
- Un ou plusieurs récepteurs associés à un ou plusieurs affiches ou produits
- Un calculateur qui a pour fonction l'acquisition et décodage du code de destinataire et l'activation d'un témoin lumineux correspondant à l'affiche ou au produit ainsi que l'association d'une référence d'affiche ou de produit au code de destinataire
- Une interface de communication avec un modem filaire ou sans fil pour assurer la liaison avec le distributeur de messages

Le distributeur de messages est constitué de :
- Un modem
- Un serveur et base de données et mémoire de toutes les coordonnées d'adresses et relatives aux codes de destinataires ainsi que toutes les références relatives aux différentes affiches et produits et messages associés
- Un ou plusieurs moyens de saisie des adresses et numéros de téléphones et toute coordonnée d'adresse ou coordonnée téléphonique
- Un système de sauvegarde
- Une interface de communication avec un modem filaire ou sans fil pour assurer la liaison avec les différents modules d'acquisition et transfert
- Un système de liaison avec les différents réseaux pour assurer l'expédition des messages sous leurs différentes formes à destination utilisateurs
- Un standard pour la mise en relation de l'utilisateur destinataire avec l'annonceur de l'affiche ou le vendeur du produit désignés suite à une double validation
- Un centre de traitement pour l'expédition de courrier postal

L'utilisateur destinataire qui se trouve à proximité d'un des distributeurs de données, peut activer manuellement le système de commande et transmission pour émettre le code de destinataire suivant l'invention.

Suivant le mode préférentiel de l'invention l'utilisateur destinataire peut activer ou désactiver par programmation sur son téléphone portable le déclenchement automatique et/ou permanent de la transmission du code de destinataire et de la commande.

Le système suivant l'invention rend possible à l'utilisateur destinataire de pouvoir retirer des messages informatifs et/ou relatifs à une affiche ou produit donnés mais aussi d'une adresse URL en vue de l'ouverture automatique ou facilitée d'une page Internet, sur un téléphone portable équipé d'Internet mais aussi un ordinateur fixe ou portable relié à un système de réseaux comme Internet.

En pratique des moyens actuels, le distributeur de messages est programmé pour communiquer des messages courts (dits SMS) à l'utilisateur destinataire. Si l'utilisateur destinataire a communiqué son adresse de courrier électronique, un courrier électronique sera expédié automatiquement par le distributeur de messages à l'utilisateur destinataire des coordonnées d'adresse ou de numéro d'appel. Si l'utilisateur destinataire a communiqué son adresse de courrier postal, un courrier postal sera expédié automatiquement par le distributeur de messages à l'utilisateur destinataire.

Les messages sont communiqués pour être affichés sur le terminal de l'utilisateur destinataire.

Le procédé pour la mise en oeuvre du système consiste :
- à définir un distributeur de messages pour l'expédition de messages sur les terminaux des utilisateurs
- à définir un ou plusieurs récepteurs, différenciés et associés au distributeur de messages pour acheminer les codes de destinataires transmis depuis différents points,
- à ce que les utilisateurs disposent d'une commande de transmission pour l'activation du dispositif du distributeur de messages auprès d'un des modules d'acquisition et de transfert ou auprès d'un de leurs récepteurs associés visés.

L'invention a également pour objet le procédé de mise en oeuvre du système selon l'invention ainsi que les commandes par transmission de code de destinataire et les dispositifs de distributeurs de données et récepteurs associés destinées à la mise en oeuvre.

Les dessins ci-joints sont donnés à titre d'exemples indicatifs et non limitatifs. Ils représentent un mode de réalisation préféré selon l'invention. Ils permettront de comprendre aisément l'invention.

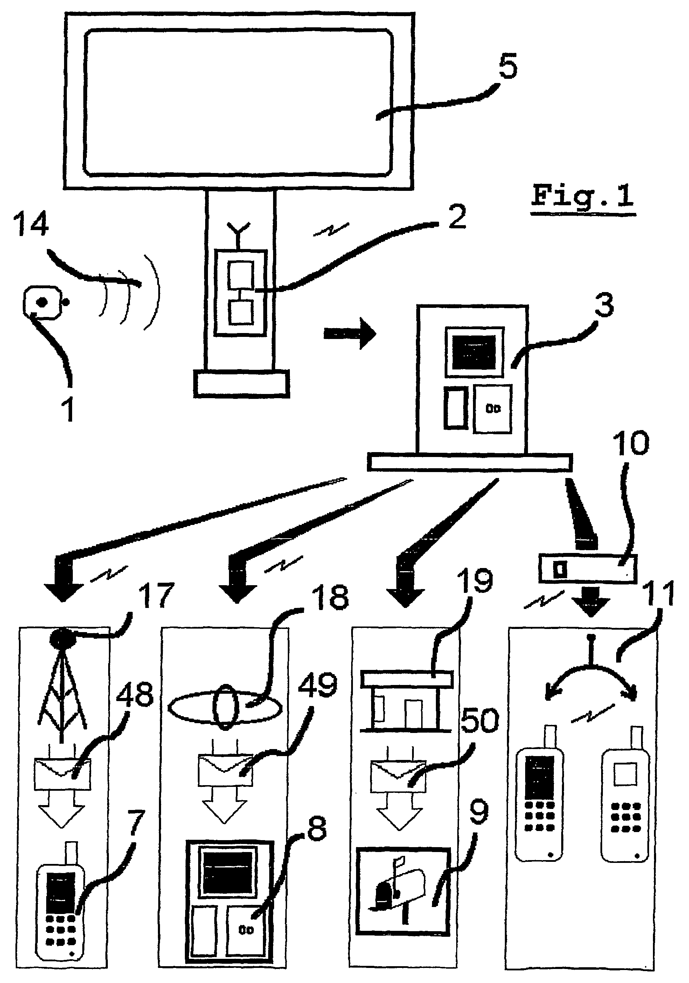

La figure 1 est une vue générale selon l'invention mettant en évidence le système de commande, agissant sur un panneau d'affichage publicitaire ou de signalisation intégrant le module d'acquisition et de transfert en relation avec le distributeur de messages pour envoyer un message court à destination du numéro d'appel de l'utilisateur reçu sur un terminal portable, un courrier électronique à destination de l'adresse électronique de l'utilisateur reçue sur un ordinateur, un courrier postal à destination de l'adresse postale de l'utilisateur reçu dans une boîte aux lettres et l'établissement d'un appel téléphonique à destination du numéro d'appel de l'utilisateur pour le joindre sur son terminal téléphonique portable.

La figure 2 est une vue générale du système selon l'invention mettant en évidence le module d'acquisition et de transfert, le distributeur de messages et les récepteurs associés reliés par connexion filaire ou transmission radio au module d'acquisition et de transfert, les dispositifs de calcul et de communication aux différents réseaux d'opérateurs(8).

La figure 3 est une vue schématique du système de commande par transmission d'un code de destinataire, à sélection séquentielle.

La figure 4 est une vue schématique du système de commande par transmission d'un code de destinataire, à sélection par pointage directionnel.

La figure 5 est une vue schématique d'un système de commande sous forme d'un accessoire indépendant du téléphone portable selon un mode possible de réalisation, mettant en évidence quelques éléments qui constituent les moyens de commande d'un code de destinataire.

La figure 6 est une vue schématique d'une batterie d'un téléphone portable selon un mode possible de réalisation, mettant en évidence quelques éléments qui constituent les moyens de commande et transmission d'un code de destinataire.

La figure 7 est une vue schématique en perspective d'un portable selon l'invention mettant en évidence quelques éléments qui constituent les moyens de transmission d'un code de destinataire.

La figure 8 est une vue schématique, mettant en évidence les modules d'acquisition et de transfert utilisant une connexion de ligne téléphonique.

La figure 9 est une vue schématique, mettant en évidence les modules d'acquisition et de transfert utilisant une connexion de ligne hertzienne.

La figure 10 est une vue schématique d'un panneau d'affichage intégrant ou associant un module d'acquisition et de transfert.

La figure 11 est une vue schématique d'un mobilier spécialisé intégrant ou associant un module d'acquisition et de transfert.

La figure 12 est une vue d'ensemble mettant en évidence deux systèmes de commande à sélection par orientation directionnelle selon l'invention et plusieurs sources de signaux distincts.

La figure 13 est une vue précise mettant en évidence la structure qui loge le capteur directif de signaux pour la sélection par orientation directionnelle du système de commande.

La figure 14 est une vue d'ensemble mettant en évidence l'utilisateur muni d'un système de commande face à trois panneaux d'affichages rapprochés, équipés chacun d'une source de signaux distincts.

La figure 15 est un organigramme illustrant le processus général de fonctionnement du système.

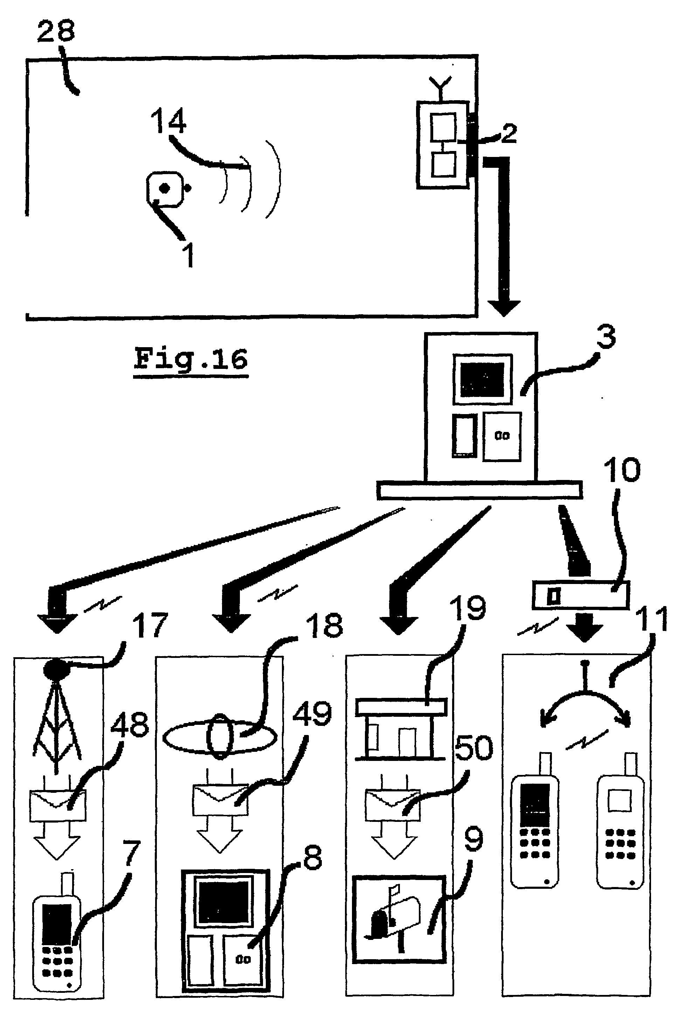

La figure 16 est une vue générale selon l'invention mettant en évidence le système de commande, agissant dans un local intégrant le module d'acquisition et de transfert en relation avec le distributeur de messages pour envoyer un message court à destination du numéro d'appel de l'utilisateur reçu sur un terminal portable, un courrier électronique à destination de l'adresse électronique de l'utilisateur reçue sur un ordinateur, un courrier postal à destination de l'adresse postale de l'utilisateur reçu dans une boîte aux lettres et l'établissement d'un appel téléphonique à destination du numéro d'appel de l'utilisateur pour le joindre sur son terminal téléphonique portable.

La figure 1 illustre le système de commande (1) agissant sur le module d'acquisition et de transfert (2) équipant un panneau d'affichage publicitaire ou de signalisation (5). Lors de l'activation par l'utilisateur du système de commande (1) et de transmission d'un code de destinataire (14), le module d'acquisition et de transfert (2) mémorise le code de destinataire et le transfert au distributeur de messages (3) pour envoyer un message (SMS) à destination du numéro d'appel de l'utilisateur, reçu sur un terminal portable (7) via le réseau d'opérateurs (17), un courrier électronique à destination de l'adresse électronique de l'utilisateur reçue sur un ordinateur (8), un courrier postal à destination de l'adresse postale de l'utilisateur reçu dans une boîte aux lettres (9). La double validation du système de commande provoque la mise en relation par appel téléphonique (d'un vendeur) à destination du numéro d'appel de l'utilisateur pour le joindre sur son terminal téléphonique portable.

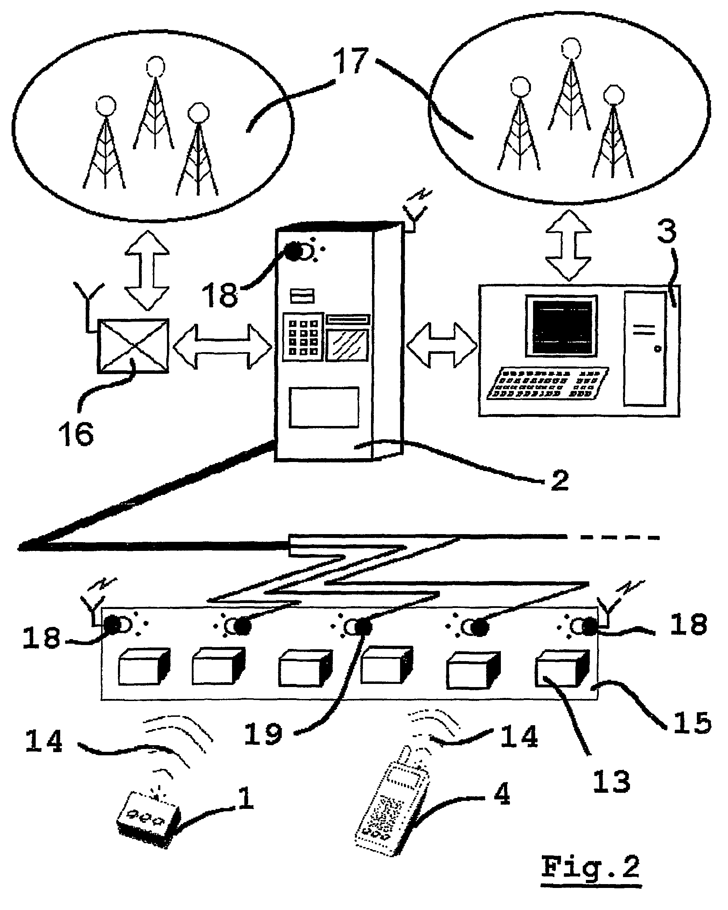

La figure 2 illustre le système de commande (1), et un téléphone équipé du système de commande (4) activé par l'utilisateur pour commander le module d'acquisition et de transfert (2), par transmission d'un code de destinataire (14) communiqué aux récepteurs (18),(19) reliés au module d'acquisition et de transfert (2) équipé de récepteurs (18),(19) associés à des produits (13) exposés dans une vitrine (15) pour l'acquisition d'un code de destinataire communiqué par l'utilisateur. Il a pour fonction celle d'associer et d'adresser respectivement à chacun des codes de destinataires acquis et acheminés par les récepteurs, un message et/ou une adresse Internet programmés et ou un fichier de programme exécutable. Le distributeur (3) attribue un ou plusieurs messages à chacun des codes de destinataires (14) transmis.

Le distributeur de messages (3) est connecté aux réseaux Internet (18) et/ou réseaux d'opérateurs (17) pour envoyer les messages sous forme d'un courrier électronique si le code de destinataire transmis (14) correspond à une adresse de courrier électronique e-mail. Alors le message peut être envoyé sous forme de message court (SMS). Dans ce cas, le réseau d'opérateur (8) transmet le message concerné au terminal (7),(8) ou par courrier à destination d'une boîte aux lettres (9). Le module d'acquisition et de transfert peut comprendre également un module de programmation (35) et de distribution (34) des différents systèmes de commande et transmission d'un code de destinataire ou des accessoires les intégrant.

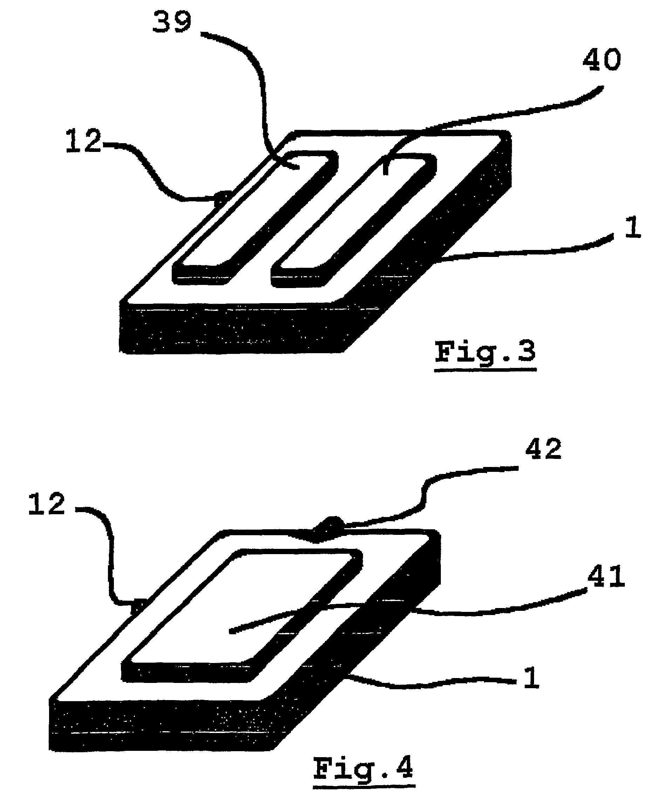

La figure 3 illustre le système de commande et de transmission d'un code de destinataire (1), qui comprend :
- Un bouton de sélection séquentielle (39)
- Un bouton de validation (40)
- Un interrupteur d'émission permanente (12)
- Un moyen d'émission/réception radio et/ou infrarouge
- Une source d'énergie

Le système de commande (1) peut intégrer un récepteur accordé sur l'émetteur de proximité (26) pour déclencher automatiquement la commande et la transmission du code de destinataire.

La figure 4 illustre le système de commande et de transmission d'un code de destinataire (1), qui comprend :
- Un bouton de sélection et de validation ou de validation directe (41)
- Un interrupteur d'émission permanent (12)
- Un moyen d'émission/réception radio et/ou infrarouge du code de destinataire (14)
- Un émetteur/récepteur directif (42) pour l'orientation du système de commande vers le signal de référence (20)
- Une source d'énergie

Le système de commande (1) peut intégrer un récepteur accordé sur l'émetteur de proximité (26) pour déclencher automatiquement la commande et la transmission du code de destinataire.

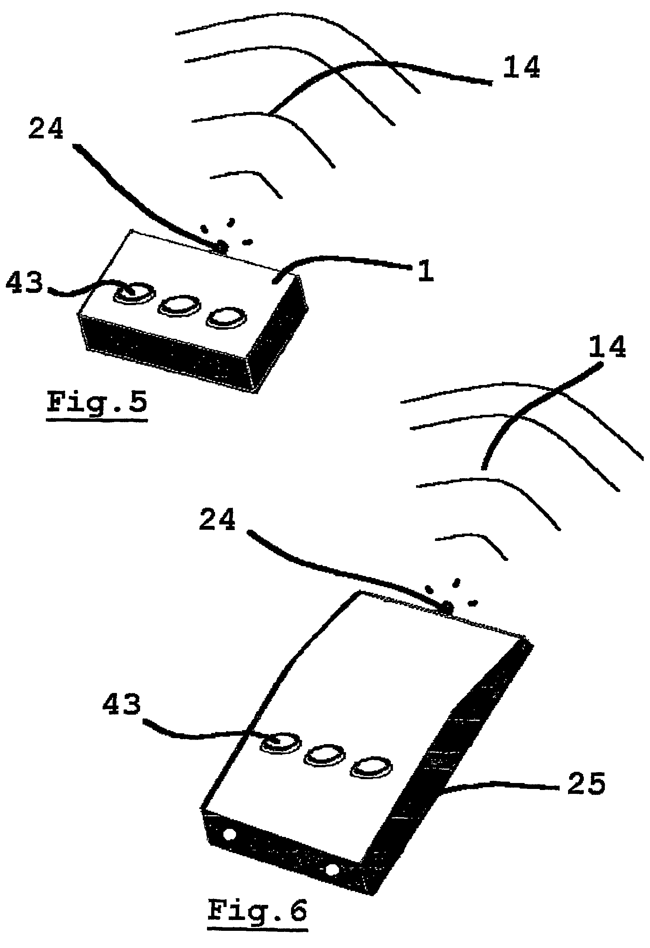

La figure 5 illustre le système de commande et transmission d'un code de destinataire détenu par l'utilisateur qui comprend :
- un émetteur radio et/ou infrarouge (1), indépendant du téléphone portable préalablement programmé pour transmettre un ou plusieurs codes de destinataires (14).
- un ou plusieurs boutons de sélection et de validation (43) correspondant chacun à un code de destinataire distinct pour ne sélectionner au choix qu'un destinataire correspondant.
- une source de lumière visible ou infrarouge ou source d'émission radio omnidirectionnelle (24) pour viser seulement un des récepteurs (18),(19) associés à un produit ou groupe de produits parmi d'autres.
- Une source d'énergie

Le système de commande (1) peut intégrer un récepteur accordé sur l'émetteur de proximité (26) pour déclencher automatiquement la commande et la transmission du code de destinataire.

La figure 6 illustre une batterie (25) d'un terminal portable intégrant le système de commande et transmission d'un code de destinataire qui comprend :
- un émetteur radio et/ou infrarouge (1), indépendant du téléphone portable préalablement programmé par le distributeur de messages pour transmettre une ou plusieurs codes de destinataires (14).
- un ou plusieurs boutons de sélection et de validation (43) correspondant chacun à un code de destinataire distinct pour ne sélectionner au choix qu'un destinataire correspondant.
- une source de lumière visible ou infrarouge ou source d'émission radio omnidirectionnelle (24) pour viser seulement un des récepteurs (18),(19) associés à un produit ou groupe de produits parmi d'autres.
- Une source d'énergie

Le système de commande (1) peut intégrer un récepteur accordé sur l'émetteur de proximité (26) pour déclencher automatiquement la commande et la transmission du code de destinataire.

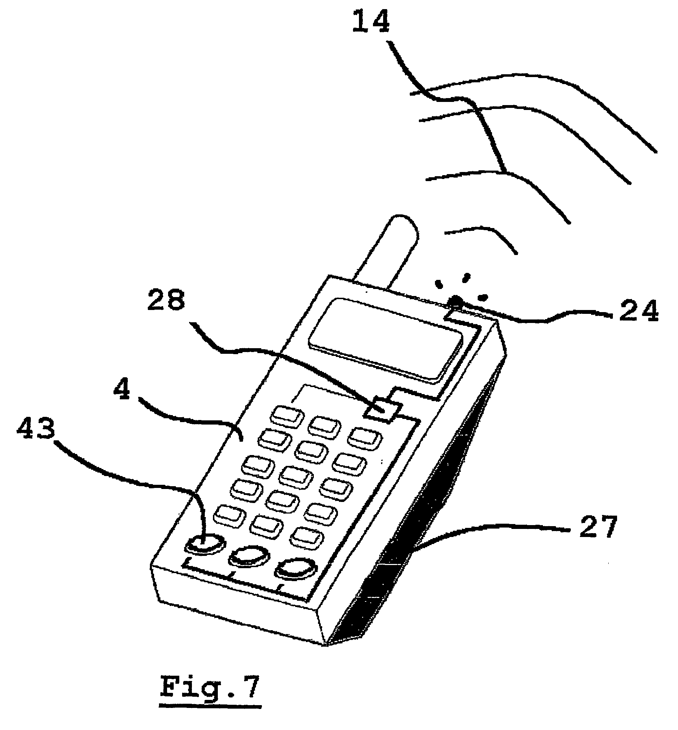

La figure 7 illustre un téléphone portable (4) intégrant le système de commande et de transmission (1) d'un code de destinataire à disposition de l'utilisateur et suivant un mode préférentiel de l'invention est composé de :
- Un bouton de sélection et de validation ou de validation directe (41)
- Un interrupteur d'émission permanent (12)
- Un moyen d'émission/réception radio et/ou infrarouge du code de destinataire (14)
- Un émetteur/récepteur directif (42) pour l'orientation du système de commande vers le signal de référence (20)
- un ou plusieurs boutons de sélection et de validation (43) correspondant chacun à un code de destinataire distinct pour ne sélectionner au choix qu'un destinataire correspondant.
- une source de lumière visible ou infrarouge ou radio omnidirectionnelle (14) pour viser un des récepteurs associés au distributeur de messages.

Le module de gestion de la commande et transmission (28) peut intégrer un récepteur accordé sur l'émetteur de proximité (26) pour déclencher automatiquement la commande et transmission dès le détection du signal de proximité (26).

Suivant le mode préférentiel de l'invention l'utilisateur peut activer ou désactiver par programmation sur son téléphone portable le déclenchement automatique de ses coordonnées électroniques, par détection du signal de proximité généré par un émetteur de proximité (26). Le système de commande et transmission d'un code de destinataire est programmé de façon à pouvoir contenir une ou plusieurs coordonnées téléphoniques ainsi qu'une ou plusieurs adresses électroniques.

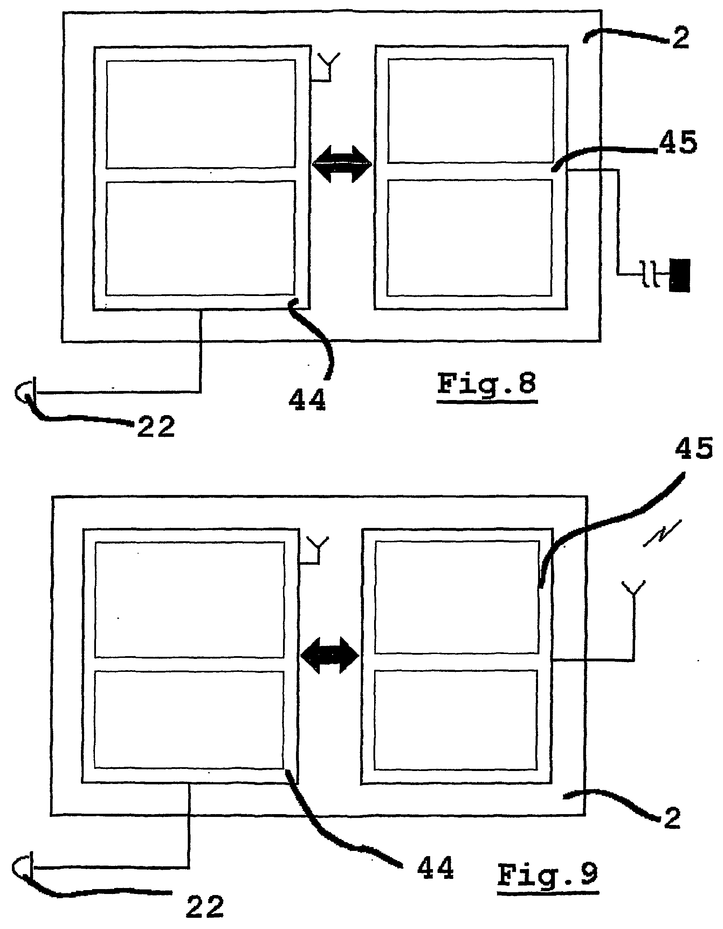

La figure 8 est une vue détaillée du module d'acquisition et de transfert (2), mettant en évidence les sous modules d'acquisition (44) et de transfert utilisant une connexion de ligne téléphonique (45). Le module d'acquisition a pour rôle l'acquisition du code de destinataire (14) transmis par le système de commande (1) et de gestion du témoin mécanique ou lumineux (22). Il est doté d'un calculateur (23) pour la gestion du module de transfert (45) qui est composé d'un modem connecté à une ligne téléphonique pour le transfert du code de destinataire vers le distributeur de messages (3).

La figure 9 est une vue détaillée, mettant en évidence les modules d'acquisition et de transfert utilisant une connexion de ligne hertzienne. est une vue détaillée du module d'acquisition et de transfert (2), mettant en évidence les sous modules d'acquisition (44) et de transfert utilisant une connexion de ligne téléphonique (45). Le module d'acquisition a pour rôle l'acquisition du code de destinataire (14) transmis par le système de commande (1) et de gestion du témoin mécanique ou lumineux (22). Il est doté d'un calculateur (23) pour la gestion du module de transfert utilisant une liaison hertzienne (46) est composé d'un modem sans fil pour le transfert du code de destinataire vers le distributeur de messages (3).

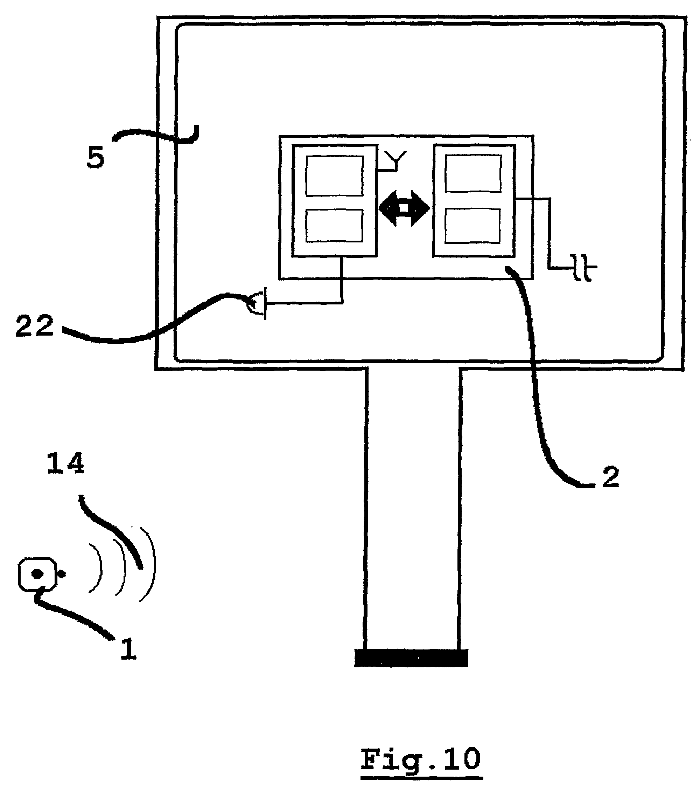

La figure 10 est une vue schématique d'un panneau d'affichage publicitaire ou de signalisation, (5) intégrant ou associant un module d'acquisition et de transfert (2). Lors de l'activation par l'utilisateur du système de commande (1) et de transmission d'un code de destinataire (14), le module d'acquisition et de transfert (2) mémorise le code de destinataire et le transfert au distributeur de messages distant (3).

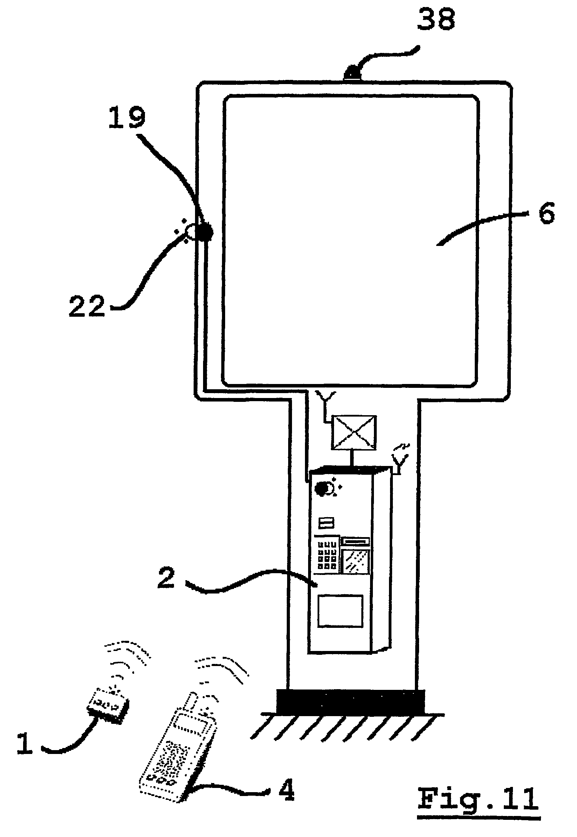

La figure 11 est une vue schématique d'un mobilier spécialisé (6) intégrant ou associant un module d'acquisition et de transfert (2). Lors de l'activation par l'utilisateur du système de commande (1) et de transmission d'un code de destinataire (14), le module d'acquisition et de transfert (2) mémorise le code de destinataire et le transfert au distributeur de messages distant (3).

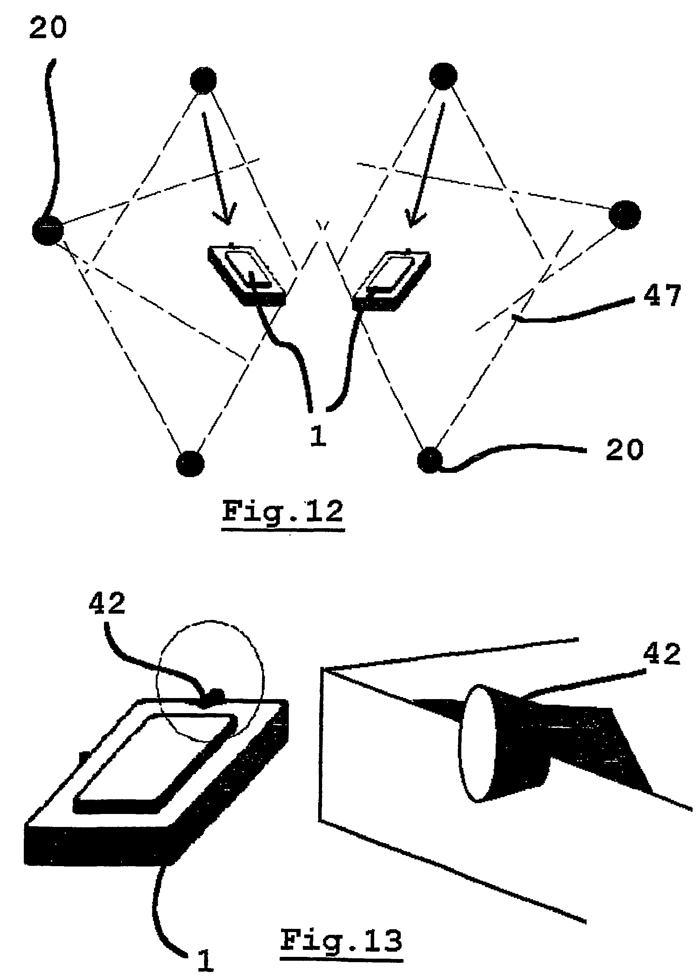

La figure 12 est une vue d'ensemble mettant en évidence deux systèmes de commande (1) à sélection par orientation directionnelle selon l'invention et plusieurs sources rapprochées de signaux distincts (20). L'utilisateur oriente le boîtier de commande (1) vers une source (20) pour sélectionner seulement une source de signal parmi d'autres sources de signaux (20). L'appui sur le bouton de validation (41) a pour fonction l'acquisition du signal (47) issu de la source de signal (20) et qui code la référence de la source et de transmission du code de référence (47) vers le module d'acquisition(2) pour ne sélectionner qu'une seule source de signaux associé à un objet, produit ou affiche exposés parmi d'autres.

La figure 13 est une vue d'ensemble mettant en évidence la structure qui loge le capteur directif (42) de signaux pour la sélection par orientation directionnelle du système de commande (1).

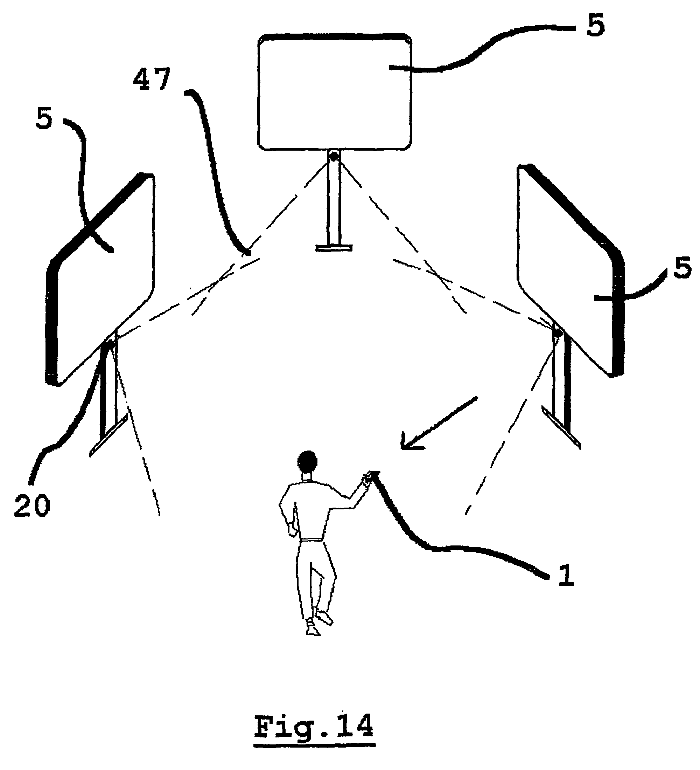

La figure 14 est une vue d'ensemble mettant en évidence trois panneaux d'affichages rapprochés (5), munis chacun d'une source de signal distinct (20) codant respectivement la référence correspondante. L'utilisateur oriente le boîtier de commande (1) vers une source (20) pour sélectionner seulement une source de signal parmi d'autres sources de signaux (20). L'appui sur le bouton de validation (41) a pour fonction l'acquisition du signal (47) issu de la source de signal (20) et qui code la référence de la source et de transmission du code de référence (47) vers le module d'acquisition(2) pour ne sélectionner qu'une seule source de signaux associée à l'affiche désignée parmi les trois autres affiches exposées.

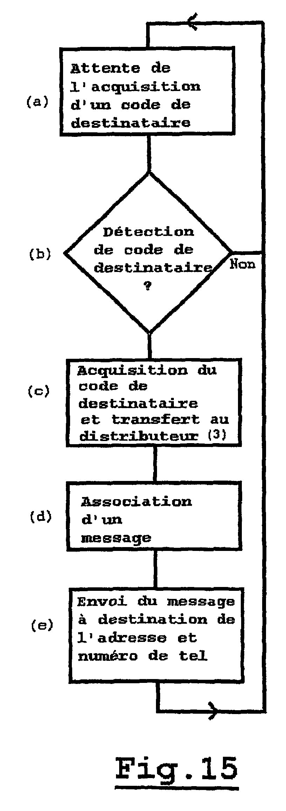

La figure 15 illustre l'organigramme chronologique des étapes d'exécution :
- L'étape (a) consiste à scruter l'ensemble des récepteurs (18),(19) reliés au module d'acquisition et de transfert. le voyant témoin ou mécanique (22) s'active dès l'acquisition du code de destinataire (14).
- L'étape (b) consiste à détecter le code de destinataire en provenance d'un des récepteurs (18),(19) et éventuellement du signal codant la référence (47) issu de la source (20)
- L'étape (c) consiste à transférer le code de destinataire et la référence du produit ou de l'affiche désignés au distributeur
- L'étape (d) consiste à attribuer un ou plusieurs messages liés aux références des produits ou affiches
- L'étape (e) consiste à expédier le(s) message(s) associés aux codes de destinataires transmis (14) à destination des adresses et/ou numéros de téléphones associés au code de destinataire (transféré par le module d'acquisition et de transfert au distributeur de messages).

La figure 16 illustre le système de commande (1) agissant sur le module d'acquisition et de transfert (2) équipant un local visité (28). Lors de l'activation par l'utilisateur du système de commande (1) et de transmission d'un code de destinataire (14), le module d'acquisition et de transfert (2) mémorise le code de destinataire et le transfert au distributeur de messages (3) pour envoyer un message (SMS) à destination du numéro d'appel de l'utilisateur, reçu sur un terminal portable (7) via le réseau d'opérateurs (17), un courrier électronique à destination de l'adresse électronique de l'utilisateur reçue sur un ordinateur (8), un courrier postal à destination de l'adresse postale de l'utilisateur reçu dans une boîte aux lettres (9). La double validation du système de commande provoque la mise en relation par appel téléphonique (d'un vendeur) à destination du numéro d'appel de l'utilisateur pour le joindre sur son terminal téléphonique portable.

### REFERENCES

1. Système de commande à distance
2. Module d'acquisition et de transfert
3. Distributeur de messages
4. Téléphone portable équipé d'un système de commande à distance
5. Panneau d'affichage publicitaire ou de signalisation intégrant un module d'acquisition et de transfert
6. Mobilier spécialisé intégrant un module d'acquisition et de transfert
7. Terminal mobile
8. Ordinateur
9. Boîte aux lettres
10. Standard de commutation ou commutateur
11. Téléphones ou terminaux en liaison de communication
12. Interrupteur à deux positions pour le déclenchement permanent de l'émission du code de destinataire
13. Objet, produit exposé
14. Signal d'émission du code de destinataire (ou coordonnée)
15. Rayon de supermarché ou vitrine d'exposition d'un ou de plusieurs produits
16. Modem sans fil (GSM, UMTS etc.)
17. Stations de bases de réseaux d'opérateurs
18. Réseau Internet
19. Centre de traitement et de tri postal
20. Récepteur sans fil associé au distributeur
21. Récepteur relié au distributeur
22. Source de signal codant une référence
23. Calculateur
24. Témoin lumineux ou mécanique dès lors de l'acquisition
25. Liaison filaire pour relier le module d' acquisition et de transfert aux récepteurs
26. Source d'émission de signaux de proximité
27. Batterie équipée du système de commande
28. Local visité (local commercial, local administratif, local touristique ...)
29. Batterie
30. Circuit de gestion du système de commande
31. Antenne de liaison sans fil pour les récepteurs(19)
32. Clavier alpha - numérique
33. Lecteur de cartes à puce ou cartes magnétiques
34. Imprimante codes barres
35. Lecteur codes barres
36. Distributeur de système de commande
37. Module de programmation des accessoires
38. Un émetteur de proximité permanent
39. Bouton de sélection séquentielle
40. Bouton de validation
41. Bouton de sélection/validation
42. Emetteur/récepteur ou capteur directif de signaux
43. Bouton de sélection de coordonnées d'adresses
44. Sous module d'acquisition
45. Sous module de transfert utilisant une ligne de communication téléphonique
46. Sous module de transfert utilisant une ligne de communication hertzienne
47. Signal codant une référence
48. Message court SMS
49. Courrier électronique e-mail
50. Courrier postal (papier)

## Revendications

1. Système de commande à distance pour activer l'envoi d'un message relatif à une affiche, un local visité, un objet ou un produit exposé à l'attention d'un destinataire comprenant un serveur distributeur de messages (3), **caractérisé par le fait qu'**il comprend :
- un boîtier de commande (1) pourvu d'un émetteur de transmission d'un code destinataire
- un module d'acquisition et de transfert (2) muni d'un récepteur d'un code destinataire en provenance du boîtier de commande et d'un sous-module de transfert du code destinataire vers le serveur distributeur de messages, ce dernier comprenant un calculateur (23) pour associer au moins un message à des coordonnées associées au code de destinataire, pour expédier le message à l'attention du destinataire, à l'aide des coordonnées correspondant à des coordonnées postales, d'adresse(s) électronique(s) et/ou de numéro(s) de téléphone.

2. Système selon la revendication 1, **caractérisé par le fait que** le boîtier de commande comprend des moyens de sélection d'un objet par pointage ou sélection séquentielle (39), et des moyens de validation de commande d'envoi (40) d'un message relatif à l'objet sélectionné par transmission d'un code de destinataire.

3. Système selon l'une quelconque des revendications 1 ou 2, **caractérisé par le fait que** le boîtier de commande est apte à transmettre des coordonnées, le module d'acquisition et de transfert étant apte à acquérir et transférer ces coordonnées vers le serveur distributeur de messages en vue de l'envoi d'un message.

4. Système selon l'une quelconque des revendications 1 à 3, **caractérisé par le fait que** la commande du serveur distributeur de messages est une commande par transmission d'un code de destinataire.

5. Système selon l'une quelconque des revendications précédentes, **caractérisé par le fait que** le code de destinataire (14) correspond à une adresse de courrier électronique e-mail.

6. Système selon l'une quelconque des revendications 1 à 4, **caractérisé par le fait que** le code de destinataire correspond à une adresse postale.

7. Système selon l'une quelconque des revendications 1 à 4, **caractérisé par le fait que** le code de destinataire correspond à un numéro d'appel téléphonique.

8. Système selon l'une quelconque des revendications précédentes, **caractérisé par le fait que** les messages mémorisés sont reçus sur un téléphone portable (7).

9. Système selon l'une quelconque des revendications précédentes, **caractérisé par le fait que** les messages mémorisés sont reçus sur un ordinateur (8).

10. Système selon l'une quelconque des revendications précédentes, **caractérisé par le fait que** les messages mémorisés sont reçus dans une boîte aux lettres (9).

11. Système selon l'une quelconque des revendications précédentes, **caractérisé par le fait que** le serveur de distribution est apte à activer un standard de commutation (10) pour la mise en relation téléphonique de l'utilisateur avec un correspondant.

12. Système selon l'une quelconque des revendications précédentes, **caractérisé par le fait que** le module d'acquisition et de transfert (2) équipe un panneau d'affichage (5), pour envoyer un ou plusieurs messages associés à l'affiche ou au panneau d'affichage à l'attention d'un destinataire.

13. Système selon l'une quelconque des revendications 1 à 11, **caractérisé par le fait que** le module d'acquisition et de transfert (2) équipe un support d'affiche publicitaire, signalétique ou informative.

14. Système selon l'une quelconque des revendications 1 à 11, **caractérisé par le fait que** le module d'acquisition et de transfert (2) comprend des moyens de synchronisation avec des supports d'affiches déroulants ou à séquences variables.

15. Système selon l'une quelconque des revendications précédentes, **caractérisé par le fait que** le module d'acquisition et de transfert (2) comprend des moyens de détection de pannes de supports d'affiches déroulants ou à séquences variables pour l'envoi d'un message relatif à la panne.

16. Système selon l'une quelconque des revendications 1 à 11, **caractérisé par le fait que** le module d'acquisition et de transfert (2) équipe un mobilier spécialisé (6).

17. Système selon l'une quelconque des revendications 1 à 11, **caractérisé par le fait que** le module d'acquisition et de transfert (2) équipe une vitrine de produits exposés (13) ou un local visité (28).

18. Système selon l'une quelconque des revendications 1 à 11, **caractérisé par le fait que** le module d'acquisition et de transfert (2) équipe un local visité (28).

19. Système selon l'une quelconque des revendications précédente, **caractérisé par le fait que** le module d'acquisition et de transfert (2) est associé à un objet ou à un produit exposé (13).

20. Système selon l'une quelconque des revendications précédentes, **caractérisé par le fait que** le boîtier de commande à distance comprend un bouton de sélection séquentielle de produits rapprochés, des appuis successifs sur le bouton de commande activent successivement un témoin lumineux ou un témoin mécanique associé à chaque affiche ou support d'affiche (6), mobilier spécialisé produit ou objet exposé (13).

21. Système selon l'une quelconque des revendications précédentes, **caractérisé par le fait que** le boîtier de commande à distance comprend un unique bouton (40) qui a un rôle de sélection séquentielle pour tout appui bref et un rôle de validation pour tout appui prolongé.

22. Système selon l'une quelconque des revendications précédentes, **caractérisé par le fait que** le boîtier de commande à distance est équipé d'un interrupteur à deux positions (12), une position commandant le déclenchement permanent de l'émission du code de destinataire (14).

23. Système de commande à distance selon la revendication 20 ou 13, **caractérisé par le fait qu'**une source de signal codant une référence équipe le support d'affiche (6), le produit ou l'objet exposé (13).

24. Système selon la revendication 23, **caractérisé par le fait que** le boîtier de commande à distance est équipé d'un récepteur directionnel (42) pour effectuer le choix par orientation du boîtier de commande en direction de l'affiche ou du support d'affiche (6), produit ou objet exposé (13) équipé de la source de signal, acquisition de la référence et transmission de la référence vers le module d'acquisition et de transfert (2).

25. Système de commande selon l'une quelconque des revendications précédentes, **caractérisé par le fait que** le boîtier de commande comprend un module électronique équipé d'un émetteur/récepteur radio et/ou infrarouge à disposition de l'utilisateur pour activer la sélection séquentielle ou par orientation du module et/ou la commande et la transmission du code de destinataire (14) au module d'acquisition et de transfert(2) pour activer auprès du distributeur de messages (3) l'expédition d'un ou de plusieurs messages (48, 49, 50) vers une ou plusieurs coordonnées d'adresse(s) ou numéros d'appel téléphonique(s) correspondant(s) au(x) code(s) de destinataire(s) (14).

26. Système selon l'une quelconque des revendications précédentes, **caractérisé par le fait que** le boîtier de commande est intégré dans un téléphone portable (4).

27. Système selon l'une quelconque des revendications précédentes, **caractérisé par le fait que** le module d'acquisition et de transfert (2) comprend un module électronique récepteur, un calculateur et un modem, pour l'acquisition et la transmission du code de destinataire (14) au distributeur de messages (3).

28. Système selon l'une quelconque des revendications précédentes, **caractérisé par le fait que** le boîtier de commande comprend une carte à mémoire pour mémoriser le code de destinataire.

29. Système selon l'une quelconque des revendications précédentes, **caractérisé par le fait que** le boîtier de commande comprend une carte magnétique pour mémoriser le code de destinataire.

## Claims

1. Remote control system for activating the transmission of a message relating to a display, a visited location, an object or a product exhibited for the attention of a recipient, comprising a message distributor server (3), **characterized in that** it comprises:
- a control unit (1) provided with a transmitter for transmitting a recipient code
- an acquisition and transfer module (2) furnished with a receiver for a recipient code originating from the control unit and with a sub-module for transferring the recipient code to the message distributor server, the latter comprising a computer (23) to associate at least one message with coordinates associated with the recipient code, to despatch the message for the attention of the recipient, using coordinates corresponding to postal coordinates, e-mail addresses and/or telephone numbers.

2. System according to Claim 1, **characterized in that** the control unit comprises means (39) for selecting an object by pointing or sequential selection and means (40) for confirming a command to send a message relating to the selected object by transmission of a recipient code.

3. System according to either one of Claims 1 or 2, **characterized in that** the control unit is suitable for transmitting coordinates, the acquisition and transfer module being suitable for acquiring these coordinates and transferring them to the message distributor server for the sending of a message.

4. System according to any one of Claims 1 to 3, **characterized in that** the control of the message distributor server is a control by transmission of a recipient code.

5. System according to any one of the preceding claims, **characterized in that** the recipient code (14) corresponds to an e-mail address.

6. System according to any one of Claims 1 to 4, **characterized in that** the recipient code corresponds to a postal address.

7. System according to any one of Claims 1 to 4, **characterized in that** the recipient code corresponds to a telephone number.

8. System according to any one of the preceding claims, **characterized in that** the messages stored are received on a mobile telephone (7).

9. System according to any one of the preceding claims, **characterized in that** the messages stored are received on a computer (8).

10. System according to any one of the preceding claims, **characterized in that** the messages stored are received in a mailbox (9).

11. System according to any one of the preceding claims, **characterized in that** the distribution server is suitable for activating a switchboard (10) for placing the user in telephone contact with a correspondent.

12. System according to any one of the preceding claims, **characterized in that** the acquisition and transfer module (2) is fitted to a display panel (5), for sending one or more messages associated with the display or with the display panel for the attention of a recipient.

13. System according to any one of Claims 1 to 11, **characterized in that** the acquisition and transfer module (2) is fitted to an advertising, signage or informative display medium.

14. System according to any one of Claims 1 to 11, **characterized in that** the acquisition and transfer module (2) comprises means of synchronization with scrolling or variable-sequence display media.

15. System according to any one of the preceding claims, **characterized in that** the acquisition and transfer module (2) comprises means of detecting failures of scrolling or variable-sequence display media in order to send a message relative to the failure.

16. System according to any one of Claims 1 to 11, **characterized in that** the acquisition and transfer module (2) is fitted to a specialized fixture (6).

17. System according to any one of Claims 1 to 11, **characterized in that** the acquisition and transfer module (2) is fitted to a shop window of exhibited products (13) or a visited location (28).

18. System according to any one of Claims 1 to 11, **characterized in that** the acquisition and transfer module (2) is fitted to a visited location (28).

19. System according to any one of the preceding claims, **characterized in that** the acquisition and transfer module (2) is associated with an object or with an exhibited product (13).

20. System according to any one of the preceding claims, **characterized in that** the remote-control unit comprises a button for sequential selection of similar products, successive presses on the control button activate successively a lamp indicator or a mechanical indicator associated with each display or display medium (6), specialist product fixture or exhibited object (13).

21. System according to any one of the preceding claims, **characterized in that** the remote-control unit comprises a single button (40) which has a sequential selection role for any brief press and a confirmation role for any prolonged press.

22. System according to any one of the preceding claims, **characterized in that** the remote-control unit is fitted with a two-position switch (12), one position contscrolling the permanent triggering of the transmission of the recipient code (14).

23. Remote-control system according to Claim 20 or 13, **characterized in that** a signal source coding a reference is fitted to the display medium (6), the product or the exhibited object (13).

24. System according to Claim 23, **characterized in that** the remote-control unit is fitted with a directional receiver (42) to make the choice by orientation of the control unit in the direction of the display or of the display medium (6), product or exhibited object (13) furnished with the signal source, acquisition of the reference and transmission of the reference to the acquisition and transfer module (2).

25. Control system according to any one of the preceding claims, **characterized in that** the control unit comprises an electronic module fitted with a radio and/or infrared transceiver available to the user to activate the selection sequentially or by orientation of the module and/or the control and the transmission of the recipient code (14) to the acquisition and transfer module (2) to activate in the message distributor (3) the despatch of one or more messages (48, 49, 50) to one or more address coordinates or telephone numbers corresponding to the recipient codes (14).

26. System according to any one of the preceding claims, **characterized in that** the control unit is integrated into a mobile telephone (4).

27. System according to any one of the preceding claims, **characterized in that** the acquisition and transfer module (2) comprises an electronic receiver module, a computer and a modem, for the acquisition and transmission of the recipient code (14) to the message distributor (3).

28. System according to any one of the preceding claims, **characterized in that** the control unit comprises a memory card to store the recipient code.

29. System according to any one of the preceding claims, **characterized in that** the control unit comprises a magnetic card to store the recipient code.

## Patentansprüche

1. Fernsteuerungssystem zum Aktivieren der Sendung einer Nachricht betreffend ein Plakat, eine besuchte Örtlichkeit, einen ausgestellten Gegenstand oder Produkt an einen Empfänger, mit einem Nachrichtenverteiler-Server (3), **dadurch gekennzeichnet, dass** es aufweist:
- ein Steuergerät (1), das mit einem Sender zur Übertragung eines Empfängercodes ausgestattet ist,
- einen Erfassungs- und Übertragungsmodul (2), der mit einem Empfänger für einen vom Steuergerät kommenden Empfängercode und mit einem Untermodul zur Übertragung des Empfängercodes an den Nachrichtenverteiler-Server versehen ist, wobei dieser letztere einen Rechner (23) aufweist, um mindestens eine Nachricht dem Empfängercode zugeordneten Adressenangaben zuzuordnen, um mit Hilfe der Postadressenangaben, elektronischen Adressenangaben und/oder Telefonnummern entsprechenden Adressenangaben die Nachricht an den Empfänger zu schicken.

2. System nach Anspruch 1, **dadurch gekennzeichnet, dass** das Steuergerät Mittel zur Auswahl eines Gegenstands durch Mausklick oder zur fortlaufenden Auswahl (39) und Mittel zur Validierung des Sendebefehls (40) einer Nachricht bezüglich des ausgewählten Gegenstands durch Übertragung eines Empfängercodes aufweist.

3. System nach einem der Ansprüche 1 oder 2, **dadurch gekennzeichnet, dass** das Steuergerät in der Lage ist, Adressenangaben zu übertragen, wobei der Erfassungs- und Übertragungsmodul in der Lage ist, diese Adressenangaben zu erfassen und mit dem Ziel des Sendens einer Nachricht zum Nachrichtenverteiler-Server zu übertragen.

4. System nach einem der Ansprüche 1 bis 3, **dadurch gekennzeichnet, dass** die Steuerung des Nachrichtenverteiler-Servers eine Steuerung durch Übertragung eines Empfängercodes ist.

5. System nach einem der vorhergehenden Ansprüche, **dadurch gekennzeichnet, dass** der Empfängercode (14) einer elektronischen e-mail-Postadresse entspricht.

6. System nach einem der Ansprüche 1 bis 4, **dadurch gekennzeichnet, dass** der Empfängercode einer Postadresse entspricht.

7. System nach einem der Ansprüche 1 bis 4, **dadurch gekennzeichnet, dass** der Empfängercode einer Telefonrufnummer entspricht.

8. System nach einem der vorhergehenden Ansprüche, **dadurch gekennzeichnet, dass** die gespeicherten Nachrichten in einem Mobiltelefon (7) empfangen werden.

9. System nach einem der vorhergehenden Ansprüche, **dadurch gekennzeichnet, dass** die gespeicherten Nachrichten in einem Computer (8) empfangen werden.

10. System nach einem der vorhergehenden Ansprüche, **dadurch gekennzeichnet, dass** die gespeicherten Nachrichten in einem Briefkasten (9) empfangen werden.

11. System nach einem der vorhergehenden Ansprüche, **dadurch gekennzeichnet, dass** der Verteilerserver in der Lage ist, eine Umschaltvermittlung (10) zu aktivieren, um den Nutzer telefonisch mit einem Gesprächspartner zu verbinden.

12. System nach einem der vorhergehenden Ansprüche, **dadurch gekennzeichnet, dass** der Erfassungs- und Übertragungsmodul (2) eine Anzeigetafel (5) bestückt, um eine oder mehrere zum Plakat oder zur Anzeigetafel gehörende Nachrichten an einen Empfänger zu senden.

13. System nach einem der Ansprüche 1 bis 11, **dadurch gekennzeichnet, dass** der Erfassungs- und Übertragungsmodul (2) einen Werbe-, Beschilderungs- oder Informations-Plakatträger bestückt.

14. System nach einem der Ansprüche 1 bis 11, **dadurch gekennzeichnet, dass** der Erfassungs- und Übertragungsmodul (2) Mittel zur Synchronisierung mit abrollenden oder variable Ablauffolgen aufweisenden Plakatträgern aufweist.

15. System nach einem der vorhergehenden Ansprüche, **dadurch gekennzeichnet, dass** der Erfassungs- und Übertragungsmodul (2) Mittel zur Erfassung von Störungen von abrollenden oder variable Ablauffolgen aufweisenden Plakatträgern aufweist, um eine die Störung betreffende Nachricht auszusenden.

16. System nach einem der Ansprüche 1 bis 11, **dadurch gekennzeichnet, dass** der Erfassungs- und Übertragungsmodul (2) eine spezialisierte Einrichtung (6) bestückt.

17. System nach einem der Ansprüche 1 bis 11, **dadurch gekennzeichnet, dass** der Erfassungs- und Übertragungsmodul (2) ein Schaufenster mit ausgestellten Produkten (13) oder eine besuchte Örtlichkeit (28) bestückt.

18. System nach einem der Ansprüche 1 bis 11, **dadurch gekennzeichnet, dass** der Erfassungs- und Übertragungsmodul (2) eine besuchte Örtlichkeit (28) bestückt.

19. System nach einem der vorhergehenden Ansprüche, **dadurch gekennzeichnet, dass** der Erfassungs- und Übertragungsmodul (2) einem ausgestellten Gegenstand oder Produkt (13) zugeordnet ist.

20. System nach einem der vorhergehenden Ansprüche, **dadurch gekennzeichnet, dass** das Fernsteuerungsgerät einen Knopf zur fortlaufenden Auswahl dicht aufeinanderfolgender Produkte aufweist, wobei aufeinanderfolgende Drückvorgänge auf den Steuerknopf nacheinander eine Leuchtanzeige oder eine mechanische Anzeige aktivieren, die jedem Plakat oder jedem Plakatträger (6), jeder spezialisierten Einrichtung, jedem ausgestelltem Produkt oder Gegenstand (13) zugeordnet sind.

21. System nach einem der vorhergehenden Ansprüche, **dadurch gekennzeichnet, dass** das Fernsteuerungsgerät einen einzigen Knopf (40) aufweist, der bei jedem kurzen Drücken die Aufgabe einer fortlaufenden Auswahl und bei jedem längeren Drücken eine Validierungsaufgabe hat.

22. System nach einem der vorhergehenden Ansprüche, **dadurch gekennzeichnet, dass** das Fernsteuerungsgerät mit einem Ein-Aus-Schalter (12) ausgestattet ist, wobei eine Stellung die permanente Auslösung des Aussendens des Empfängercodes (14) steuert.

23. Fernsteuerungssystem nach Anspruch 20 oder 13, **dadurch gekennzeichnet, dass** eine ein Kennzeichen codierende Signalquelle den Plakatträger (6), das Produkt oder den ausgestellten Gegenstand (13) bestückt.

24. System nach Anspruch 23, **dadurch gekennzeichnet, dass** das Fernsteuerungsgerät mit einem Richtempfänger (42) ausgestattet ist, um die Wahl durch Ausrichten des Steuergeräts in Richtung des mit der Signalquelle ausgestatteten Plakats oder Plakatträgers (6), Produkts oder ausgestellten Gegenstands (13), Erfassung des Kennzeichens und Übertragung des Kennzeichens zum Erfassungs- und Übertragungsmodul (2) durchzuführen.

25. Steuersystem nach einem der vorhergehenden Ansprüche, **dadurch gekennzeichnet, dass** das Steuergerät einen Elektronikmodul aufweist, der mit einem Funk- und/oder Infrarotsender/-empfänger ausgestattet ist, der dem Nutzer zur Verfügung steht, um die fortlaufende Wahl oder die Wahl durch Ausrichtung des Moduls, und/oder die Steuerung und die Übertragung des Empfängercodes (14) zum Erfassungs- und Übertragungsmodul (2) zu aktivieren, um im Nachrichtenverteiler (3) die Aussendung einer oder mehrerer Nachrichten (48, 49, 50) zu einer oder mehreren Adressenangabe(n) oder Telefonrufnummer(n) zu aktivieren, die dem (den) Empfängercode(s) (14) entspricht (entsprechen).

26. System nach einem der vorhergehenden Ansprüche, **dadurch gekennzeichnet, dass** das Steuergerät in ein Mobiltelefon (4) integriert ist.

27. System nach einem der vorhergehenden Ansprüche, **dadurch gekennzeichnet, dass** der Erfassungs- und Übertragungsmodul (2) einen elektronischen Empfangsmodul, einen Rechner und ein Modem für die Erfassung und die Übertragung des Empfängercodes (14) an den Nachrichtenverteiler (3) aufweist.

28. System nach einem der vorhergehenden Ansprüche, **dadurch gekennzeichnet, dass** das Steuergerät eine Speicherkarte aufweist, um den Empfängercode zu speichern.

29. System nach einem der vorhergehenden Ansprüche, **dadurch gekennzeichnet, dass** das Steuergerät eine Magnetkarte aufweist, um den Empfängercode zu speichern.
